# EUROPÄISCHE PATENTSCHRIFT

(11) **EP 1 907 158 B1**
(45) Veröffentlichungstag und Bekanntmachung des Hinweises auf die Patenterteilung: **22.08.2012**
(21) Anmeldenummer: 06762562.4
(22) Anmeldetag: 13.07.2006
(51) Int. Cl.: B23C 5/20

(54) **SCHNEIDEINSATZ, WERKZEUG SOWIE VERFAHREN ZUR SPANENDEN BEARBEITUNG EINES WERKSTÜCKS**
CUTTING INSERT, TOOL AND METHOD OF MACHINING A WORKPIECE
ELEMENT DE COUPE A INSERER, OUTIL ET PROCEDE D'USINAGE D'UNE PIECE

(30) Priorität: 20.07.2005 DE 102005033920
(43) Veröffentlichungstag der Anmeldung: 09.04.2008
(73) Patentinhaber: KENNAMETAL INC., Latrobe, PA 15650-0231 (US)
(72) Erfinder: BODEWIG, Frank, 50170 Kerpen (DE)
(74) Vertreter: FDST Patentanwälte
(86) Internationale Anmeldenummer: PCT/EP2006/006833
(87) Internationale Veröffentlichungsnummer: WO 2007/009650

(56) Entgegenhaltungen:
- EP-A2- 0 342 689
- EP-A2- 1 108 489
- WO-A1-2004/080633
- US-B2- 6 604 893

## Beschreibung

Die Erfindung betrifft einen Schneideinsatz, ein Werkzeug, sowie ein Verfahren zur spanenden Bearbeitung eines Werkstücks, wobei der Schneideinsatz einen n-eckigen Grundkörper mit n≥6 aufweist und dessen n-eckige Grundfläche begrenzenden n-Kanten abwechselnd als Schlichtschneiden zur Feinbearbeitung und als Schruppschneiden zur Grobbearbeitung des Werkstücks ausgebildet sind.

Unter Schruppen oder Schruppbearbeitung wird allgemein eine Grobbearbeitung und unter Schlichten oder Schlichtbearbeitung allgemein eine Fein- oder Nachbearbeitung der durch eine vorhergehende Schruppbearbeitung erzeugten rauen Oberfläche verstanden.

Ein derartiger als Schlichteinsatz bezeichneter Schneideinsatz ist beispielsweise in der WO 97/27967 beschrieben. Der Schlichteinsatz weist einen hexagonalen Grundkörper auf, dessen Kanten abwechselnd als Schlichtschneiden und Schruppschneiden ausgebildet sind. Schruppschneiden werden hierbei als Hauptschneiden und die Schlichtschneiden als Nebenschneiden bezeichnet. Mehrere der Schneideinsätze sind zur Anordnung an einem als Planfräser ausgebildeten Werkzeug vorgesehen. Hierbei werden um die stirnseitige Umfangsfläche des Planfräsers verteilt mehrere Schruppeinsätze zur Grobbearbeitung und an definierten Positionen Schlichteinsätze zur Feinbearbeitung angeordnet.

Aus der US 6,604,893 B2 ist ein Schneideinsatz mit oktagonaler Geometrie zu entnehmen, wobei jede der acht Seitenkanten jeweils eine Schlicht- und eine Schruppschneide aufweist. Hierzu sind die einzelnen Schneiden auf unterschiedlichen Höhen angeordnet, liegen also nicht in einer gemeinsamen Ebene. Eine sich an die Schneidkanten jeweils radial zu der Mittenachse des Schneideinsatzes anschließende Spanfläche ist abfallend ausgebildet, so dass sich eine sehr komplexe Oberflächentopographie des Schneideinsatzes ergibt.

Bei der spanenden Bearbeitung eines Werkstücks insbesondere mit einem Planfräser besteht insbesondere bei höheren Vorschubgeschwindigkeiten das Problem, dass die bearbeitete Oberfläche eine nur ungenügende Oberflächengüte mit kreisbogenartigen Erhebungen aufweist.

Aus der WO 2004/080633 A1 sowie EP 0 342 689 A2 sind Schneideinsätze gemäß dem Oberbegriff des Anspruchs 1 mit n-eckigen Grundkörpern zu entnehmen, bei denen der Grundkörper an einer seiner Seitenkanten einen Knick aufweist, so dass an einer Seitenkante zwei Schneid-Teilbereiche ausgebildet sind. Der Schneideinsatz weist daher zweimal n-Schneidkanten auf.

Der Erfindung liegt die Aufgabe zu Grunde, eine verbesserte Oberflächengüte bei der spanenden Werkstückbearbeitung zu ermöglichen.

Die Aufgabe wird gemäß der Erfindung gelöst, durch einen Schneideinsatz gemäß Patentanspruch 1. Der Schneideinsatz weist einen n-eckigen Grundkörper mit sechs oder mehr Kanten auf. Die seine n-eckige Grundfläche begrenzenden Kanten sind abwechselnd als Schlichtschneiden und als Schruppschneiden ausgebildet. Eine jeweilige Schneide ist hierbei zu ihren benachbarten Schneiden unter unterschiedlichen Winkeln angeordnet. Der Grundkörper weist daher eine im Unterschied zu den herkömmlichen Schneideinsätzen ungleichmäßige Grundfläche auf. Die herkömmlichen hexagonalen oder oktagonalen Schneideinsätze weisen nämlich jeweils eine gleichmäßige Grundfläche auf, so dass die einzelnen die Grundfläche aufspannenden Kanten zueinander unter identischen Winkeln angeordnet sind.

Benachbarte Schneiden sind alternierend unter einem großen und einem kleinen Winkel zueinander angeordnet. Durch die periodisch wiederkehrenden Winkelpaare ist jeweils ein Schneidenpaar bestehend aus einer Schrupp- und einer Schlichtschneide gebildet, wobei jedes Schneidenpaar identisch ausgebildet ist. Insgesamt weist dadurch der Schneideinsatz eine Symmetrie auf. Bei einem hexagonalen Grundkörper ist der Schneideinsatz daher bezüglich einer 120° Drehung um die Mittenachse rotationssymmetrisch ausgebildet. Diese symmetrische Ausgestaltung hat den besonderen-Vorteil, dass der Schneideinsatz auch in bestehende Werkzeugtragkörper für herkömmliche, gleichmäßige Schneideinsätze eingesetzt werden kann, ohne dass große Änderungen am Plattensitz im Werkzeugtragkörper vorgenommen werden müssen.

Nach oben hin ist der große Winkel durch einen Wert von etwa 140° beschränkt. Bei dieser Ausgestaltung wird noch ein ausreichend großer und für die Bearbeitung zweckmäßiger Einstellwinkel der Schruppschneide bezüglich einer durch die Werkstückoberfläche definierten Bearbeitungsebene ermöglicht. Unter Einstellwinkel wird hier allgemein der Winkel verstanden, unter dem die Haupt- oder Schruppschneide zu der Bearbeitungsebene, also der Werkstückoberfläche orientiert ist.

Durch die ungleichmäßige Ausgestaltung, also den unterschiedlichen Winkeln zwischen benachbarten Schneiden, sind die einzelnen Schneiden unterschiedlich lang ausgebildet. Durch diese Maßnahme wird erreicht, dass mehrere der Schneiden im Vergleich zu einer gleichmäßigen Ausgestaltung etwas nach außen gezogen sind, also weiter von der Mittellängsachse des Schneideinsatzes entfernt sind. Diese nach außen gezogenen Schneiden sind zweckdienlicherweise die Schlichtschneiden. Durch diese Maßnahme wird erreicht, dass bei der spanenden Bearbeitung des Werkstücks die Schlichtschneide mit einer vergleichsweise großen Schneidenlänge zusätzlich zu der vorhergehenden Schruppschneide in Eingriff mit der Werkstückoberfläche steht. Da die Schlichtschneide Ober eine vergleichsweise große Länge mit der Werkstückoberfläche in Eingriff steht, erfolgt eine effektive Schlicht- oder Feinbearbeitung. Die durch die Schruppschneide bei hohen Vorschüben des Werkzeugs erzeugte Oberflächenrauigkeit mit den periodisch beabstandeten rippenartigen Erhebungen wird durch die Schlichtschneide effizient abgetragen, so dass insgesamt eine Oberfläche mit sehr hoher Oberflächengüte in nur einem Arbeitsvorgang selbst bei hoher Vorschubgeschwindigkeit erzielt ist.

Im Hinblick auf eine möglichst einfache Ausgestaltung des Schneideinsatzes sind die n-Kanten, die die Schneiden bilden, innerhalb einer gemeinsamen Ebene angeordnet.

Vorzugsweise ist hierbei der große Winkel jeweils um zumindest 5° größer als der n-te Teil der Winkelsumme des n-eckigen Grundkörpers. Bei einem sechseckigen Grundkörper weist der große Winkel daher mindestens 125°auf. Mit zunehmendem Winkel wird die Schlichtschneide zunehmend weiter nach außen gezogen, so dass eine zunehmend größer Länge der Schlichtschneide bei der Werkstückbearbeitung in Eingriff mit der Werkstückoberfläche steht.

Um einen möglichst großen Eingriff der Schlichtschneide mit der Werkstückoberfläche zu erzielen, ist gemäß einer zweckdienlichen Weiterbildung vorgesehen, dass die Winkelsumme des Einstellwinkels und des großen Winkels sich zu etwa 180° ergänzen. Durch diese Maßnahme wird erreicht, dass die Schlichtschneide im Wesentlichen in etwa parallel zu der Bearbeitungsebene verläuft. In Abhängigkeit des Einstellwinkels ist daher über die oben genannte Beziehung der große Winkel festgelegt. Bei einem Einstellwinkel von 45° beträgt daher der große Winkel 135 °. Da aufgrund der symmetrischen Ausgestaltung der große und der kleine Winkel sich zu dem doppelten der n-ten der Winkelsumme der n-eckigen Grundfläche ergeben, ist hierdurch zugleich der Wert für den kleinen Winkel festgelegt. Dieser beträgt bei einer sechseckigen Grundgeometrie und einem Einstellwinkel von 45° daher 105°.

Um ein sauberes Schneiden mit der als Nebenschneide ausgebildeten Schlichtschneide zu erzielen, weist diese zu der Bearbeitungsebe vorzugsweise einen geringen Nebenschneiden-Freigang auf. Unter Nebenschneiden-Freigang wird hierbei eine Beabstandung der Schlichtschneide von der Bearbeitungsebene verstanden, und zwar im rückwärtigen Bereich der Schlichtschneide, der von der als Hauptschneide ausgebildeten Schruppschneide beabstandet ist.

Zur Ausbildung dieses Nebenschneiden-Freigangs besteht prinzipiell die Möglichkeit, die Nebenschneide unter einem geringen Winkel von beispielsweise 1 bis 2° schräg zur Bearbeitungsebene verlaufend auszubilden. In diesem Fall würde dann die Schlichtschneide nicht mehr parallel zur Bearbeitungsebene verlaufen und die Winkelsumme des Einstellwinkels und des großen Winkels würde um diesen Winkel vermindert unter 180° liegen.

Vorzugweise ist zur Ausbildung des Nebenschneiden-Freigangs die Schlichtschneide jedoch als so genannte Wiper-Schneide ausgebildet. Zweckdienlicherweise ist hierbei vorgesehen, dass die Schlichtschneide leicht gerundet ausgebildet ist und entlang einer Bogenlinie verläuft. Diese ist insbesondere eine Kreislinie mit einem sehr großen Radius, der bevorzugt im Bereich zwischen 500 mm und 3000 mm liegt. Durch die Ausgestaltung der Schlichtschneide als gekrümmte Schneide im Unterschied zu einer sich geradlinig erstreckenden Schneide weist die Schlichtschneide im Eckbereich zu der vorausgehenden Schruppschneide einen höchsten Punkt auf, so dass die Schichtschneide definiert in Eingriff mit der Werkstückoberfläche steht. Durch die bogenförmige Ausbildung der Schlichtschneide nimmt der Abstand zu der Bearbeitungsebene und damit der Nebenschneiden-Freigang im weiteren Verlauf der Schlichtschneide zunehmend zu.

Zweckdienlicherweise ist der Schneideinsatz für einen Einstellwinkel zwischen 40° und 55°, insbesondere für einen Einstellwinkel von 45° vorgesehen. Da in Abhängigkeit des Einstellwinkels sich die Werte für den großen und kleinen Winkel bestimmen, ist für jeden Einstellwinkel ein spezieller Schneideinsatz vorgesehen. Bevorzugt weist hierbei der Schneideinsatz ausgehend von einer hexagonalen Grundgeometrie eine sechseckige Grundgeometrie auf.

Um eine möglichst hohe Standzeit des Schneideinsatzes zu ermöglichen ist dieser bevorzugt als doppelseitige Wendeschneidplatte mit 2n Schneiden ausgebildet, d. h. sowohl an seiner Oberseite als auch an seiner Unterseite sind Schneidkanten ausgebildet. Da aufgrund der gewählten speziellen Ausgestaltung bei einem Bearbeitungsvorgang jeweils ein Schneidenpaar, bestehend aus Schuppschneide und Schlichtschneide, in Eingriff mit dem Werkstück steht, kann der Schneideinsatz pro Seite lediglich n/2 mal gewechselt werden. Bei einer sechseckigen Grundgeometrie kann der Schneideinsatz daher pro Seite 3 mal und insgesamt 6 mal gewechselt werden, bis er vollständig verschlissen ist

Die Aufgabe wird erfindungsgemäß weiterhin gelöst durch ein Werkzeug mit den Merkmalen gemäß Patentanspruch 12 oder 13 sowie durch ein Verfahren mit den Merkmalen gemäß Patentanspruch 14. Die im Hinblick auf den Schneideinsatz angeführten Vorteile und bevorzugten Ausgestaltungen sind sinngemäß auch auf das Werkzeug und das Verfahren zu übertragen.

Gemäß einer zweckdienlichen Ausgestaltung umfasst das Werkzeug einen Werkzeugtragkörper mit einem Plattensitz, der zumindest zwei stirnseitige Anlageflächen aufweist, an denen der Schneideinsatz in der montierten Stellung mit zwei seiner Stirnseiten plan anliegt. Zwischen den Anlageflächen ist hierbei eine einen Freiraum bildende Aufnahmetasche vorgesehen. Der Plattensitz kann unmittelbar im Werkzeugtragkörper oder in einer austauschbaren Kasette ausgebildet sein. In der montierten Stellung ragt eine Schneidecke des Schneideinsatzes in den Freiraum hinein, ohne in diesem Bereich im Plattensitz anzuliegen. Durch diese Maßnahme eignet sich der Werkzeugtragkörper auch zur Aufnahme von herkömmlichen Schneideinsätzen mit gleichseitiger n-eckiger, beispielsweise hexagonaler Geometrie und kann daher wahlweise mit -herkömmlichen oder mit den hier beschriebenen Schneideinsätzen bestückt werden. Die beiden Anlageflächen sind hierzu entlang der Seiten eines gleichseitigen n-Ecks orientiert, bei dem benachbarte Kanten jeweils den gleichen Winkel zwischen sich einschließen. Bei einer hexagonalen Grundgeometrie schließen die beiden Anlageflächen (die in die Aufnahmetaschen gedachten Verländerungen der Anlageflächen) daher einen Winkel von 60° ein, so dass auch ein herkömmlicher hexagonaler Schneideinsatz mit seinen Stirnseiten plan an den Anlageflächen anliegt.

Ausführungsbeispiele der Erfindung werden im Folgenden anhand der Zeichnung näher erläutert. Es zeigen in teilweise schematischen Darstellungen
- Fig. 1: eine perspektivische Ansicht eines als Planfräser ausgebildeten Werkzeugs,
- Fig. 2: Eine Schnittansicht des Planfräsers gemäß Fig. 1,
- Fig. 3: eine vergrößerte, ausschnittsweise und vereinfachte Darstellung eines Schneideinsatzes in seiner Einbaulage in einem Plattensitz eines Werkzeugtragkörpers,
- Fig. 4: eine vereinfachte Darstellung eines Einsatzes, der für einen Einstellwinkel von 40 ausgebildet ist,
- Fig. 5: eine vereinfachte Darstellung eines Einsatzes, der für einen Einstellwinkel von 55° ausgebildet ist,
- Fig. 6: eine vereinfachte perspektivische Darstellung eines Schneideinsatzes,
- Fig. 7: eine stirnseitige Ansicht eines Schneideinsatzes und
- Fig. 8: eine vergrößerte Darstellung des in Fig. 2 mit einem Kreis markierten Ausschnitts im Bereich des gerundeten Übergangs zwischen einer Schruppschneide zu einer Schlichtschneide.

In den Figuren sind gleichwirkende Teile mit den gleichen Bezugszeichen versehen.

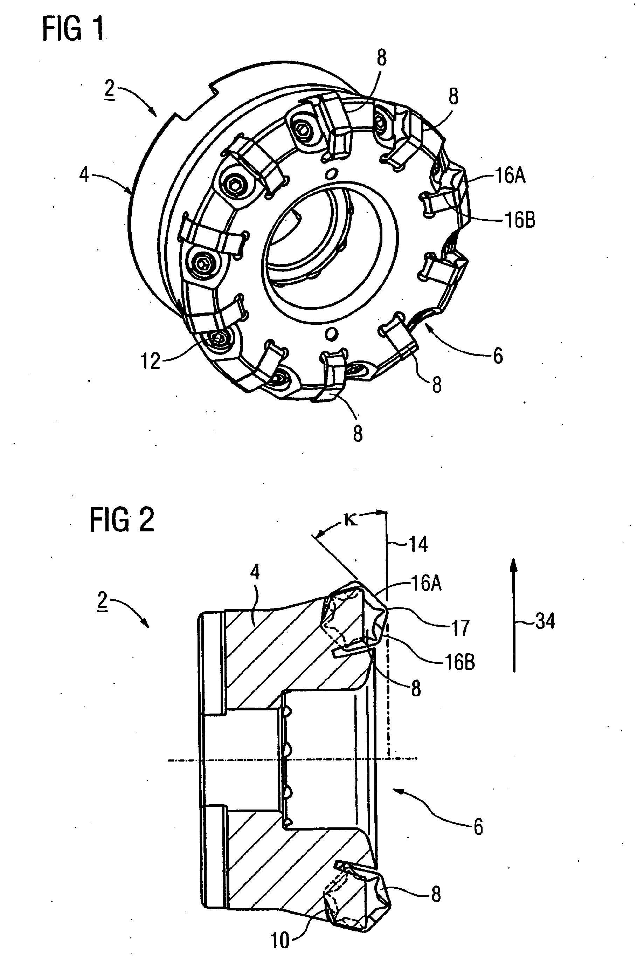

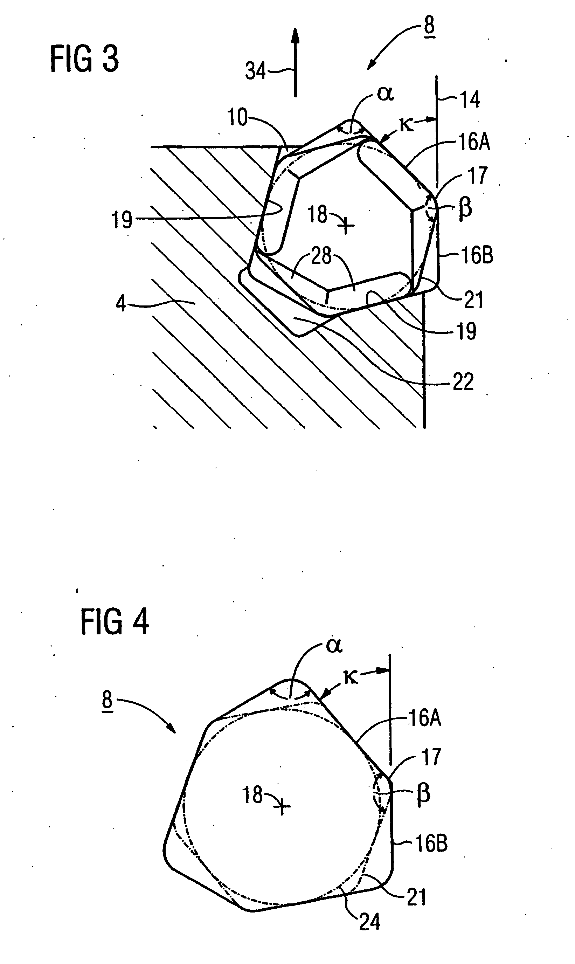

Das im Ausführungsbeispiel als Planfräser 2 ausgebildete Werkzeug umfasst einen Werkzeugtragkörper 4, der eine stirnseitige Bearbeitungsseite 6 aufweist. Um den Umfang der Bearbeitungsseite 6 verteilt sind eine Anzahl von Schneideinsätzen 8 angeordnet. Die Schneideinsätze 8 liegen jeweils in einem unmittelbar in den Werkzeugtragkörper 4 eingearbeiteten Plattensitz 10 (vgl. Fig. 2 und 3) ein. Alternativ hierzu besteht die Möglichkeit, dass die Schneideinsätze 8 in Kassetten angeordnet sind, welche wiederum im Werkzeugtragkörper 4 gehalten sind. Die Schneideinsätze 8 sind mit Hilfe von Schrauben 12 im Werkzeugtragkörper 4 in einer definierten Position gehalten.

Zur Bearbeitung einer Werkstückoberfläche wird der Planfräser mit seiner Bearbeitungsseite 6 in Eingriff mit der Werkstückoberfläche gebracht. Die Werkstückoberfläche definiert hierbei eine Bearbeitungsebene 14, wie sich insbesondere aus Figur 2 ergibt. Die Bearbeitungsebene wird von den einzelnen Schneideinsätzen 8 des Planfräsers 2 aufgespannt.

Die Schneiden 16A,B sind als Haupt- und Nebenschneiden ausgebildet und gehen über ein gerundet ausgebildetes Scheideneck 17 ineinander über. Der Schneideinsatz 8 ist bevorzugt als doppelseitige Wendeschneidplatte ausgebildet, dessen Kanten jeweils als Schneiden 16A,B ausgebildet sind. Eine der Schneiden, nämlich eine Schruppschneide 16A, ist bezüglich der Bearbeitungsebene 14 unter einem Einstellwinkel κ angeordnet, der im Ausführungsbeispiel 45° beträgt.

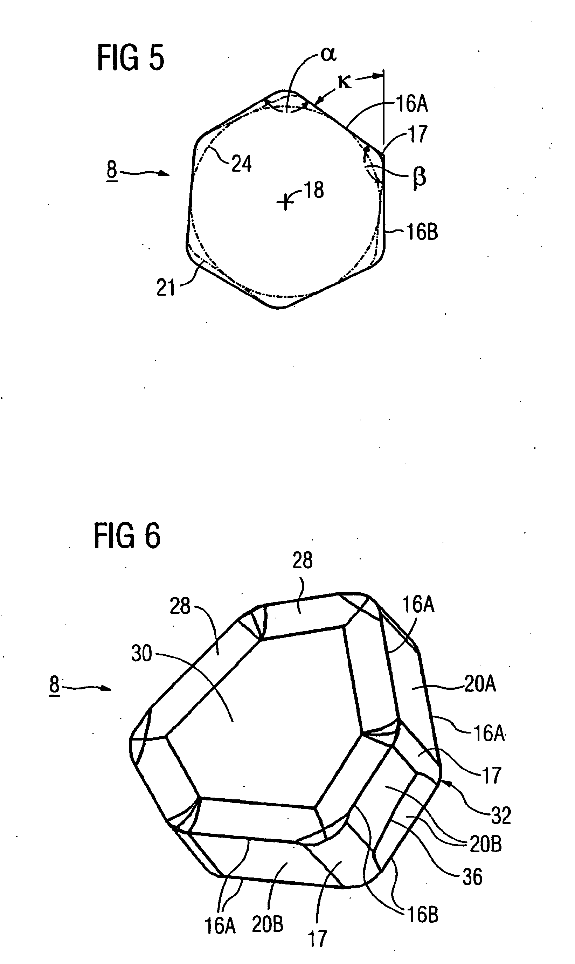

Die Grundgeometrie des Schneideinsatzes 8, also seine senkrecht zu seiner Mittenachse 18 orientierte Querschnittsfläche, sowie seine Einbaulage im Plattensitz 10 wird nun anhand von Fig. 3 erläutert. Im Ausführungsbeispiel weist der Schneideinsatz 8 eine sechseckige Grundgeometrie, ausgehend von einer gleichmäßigen hexagonalen Querschnittsgeometrie auf. Der Plattensitz 10 weist zwei Anlageflächen 19 auf, an denen sich zwei Stirnseiten 20 A,B (vgl. Fig. 6) des Schneideinsatzes 8 abstützen. Die Anlageflächen 19 schließen zueinander einen Winkel von 60° ein. Der Plattensitz 10 ist dadurch insbesondere auch für die Aufnahme eines herkömmlichen hexagonalen Schneideinsatzes ausgebildet. Die Querschnittsgeometrie eines solchen herkömmlichen Schneideinsatzes ist durch eine ein Hexagon 21 bildende gestrichelte Linie in Fig. 3 angedeutet. Der Plattensitz 10 weist an seiner Rückseite eine Aufnahmetasche 22 auf, in die ein Teilbereich des Schneideinsatzes 8 eindringt.

Im Unterschied zu der hexagonalen Querschnittsfläche weist der Schneideinsatz 8 eine ungleichmäßige Ausgestaltung auf, und zwar sind die die einzelnen Schneiden 16A,B bildenden Kanten des Schneideinsatzes 8 zueinander abwechselnd unter einen kleinen Winkel α und einem großen Winkel β zueinander angeordnet. Bei der Fig. 3 beträgt der Einstellwinkel κ 45°, der kleine Winkel α jeweils 105° und der große Winkel β jeweils 135°. Durch die ungleichmäßige Ausgestaltung sind paarweise abwechselnd eine lange Schneide 16A und eine kürzere Schneide 16B ausgebildet. Die längere Schneide 16A ist hierbei als Schruppschneide und die kürzere Schneide 16B als Schlichtschneide nach Art einer Wiper-Schneide ausgebildet.

Wie sich durch Vergleich mit der gestrichelt eingezeichneten hexagonalen Geometrie unmittelbar erkennen lässt, ist durch die ungleichmäßige Ausgestaltung die Schlichtschneide 16B von der Mittenachse 18 etwas weiter nach außen zur Bearbeitungsebene 14 hin gezogen. Im Ausführungsbeispiel sind die Winkel α, β sowie der Einstellwinkel κ derart gewählt, dass die Schlichtschneide 16B im Wesentlichen parallel zur Bearbeitungsebene 14 verläuft.

In Figur 3 ist weiterhin gestrichelt ein Innenkreis 24 eingezeichnet. Die einzelnen Seiten des ebenfalls gestrichelt eingezeichneten Hexagons 21 bilden Tangenten dieses Innenkreises. Gleichzeitig bilden die Anlageflächen 19 Tangenten zum Innenkreis 24. Der Schneideinsatz 8 in seiner ungleichmäßigen Ausgestaltung ist nunmehr derart ausgebildet, dass abwechselnd jede zweite Kante, also jeweils die Schruppschneide 16A, ebenfalls tangential am Innenkreis 14 anliegt. Durch diese Ausgestaltung wird sicher gestellt, dass der Schneideinsatz 8 mit der ungleichmäßigen Geometrie auch in Plattensitzen 10 für herkömmliche hexagonale Schneideinsätze einsetzbar ist. Lediglich am Grund des Plattensitzes ist die Aufnahmetasche 22 erforderlich, um die Schlichtschneide 16B aufnehmen zu können.

In Fig. 3 sind weiterhin schematisch und stark vereinfacht angrenzend zu den einzelnen Schneiden 16A, 16B Spanstufen 28 angedeutet, die im Ausführungsbeispiel nach Art von sich geradlinig erstreckende Mulden ausgebildet sind. Die Spanstufen 28 dienen zur gezielten und definierten Behandlung des von den Schneiden 16A,16B abgetragen Spans, d. h. zur gezielten Spanleitung, Spanformung und auch zum gezielten Brechen des Spans. Die Spanstufen können auch in anderen Geometrie ausgebildet werden.

In den Figuren 4 und 5 sind jeweils Schneideinsätze 8 gezeigt, die für einen Einstellwinkel κ von 40° (Fig. 4) sowie für einen Einstellwinkel κ von 55° (Fig. 5) ausgebildet sind.

Beim Schneideinsatz 8 gemäß Fig. 4 und dem Einstellwinkel κ von 40° beträgt der große Winkel β 140° und der kleine Winkel α 100°.

Beim Schneideinsatz 8 gemäß Fig. 5, der für einen Einstellwinkel κ von 55° ausgebildet ist, beträgt demgegenüber der große Winkel β 125° und der kleine Winkel α 115°. Die Winkelsumme dieser beiden Winkel ergibt jeweils 240°, also das Doppelte des Winkels von 120° zwischen zwei benachbarten Seiten eines gleichmäßigen Hexagons 21.

Anhand der perspektivischen Darstellung des Schneideinsatzes 8 gemäß Fig. 6 ist zu erkennen, dass die Schneiden 16A,B innerhalb einer gemeinsamen Ebene liegen. Der Schneideinsatz 8 weist eine Oberseite 30 und eine dieser gegenüberliegende und zur Oberseite 30 planparallel ausgerichtete Unterseite 32 auf. Sowohl die Kanten der Oberseite 30 als auch die Kanten der Unterseite 32 sind als Schneiden 16A,B ausgebildet. Gegenüberliegende Schneiden 16A,B der Oberseite 30 und der Unterseite 32 sind jeweils über die Stirnseite 20A,B des Schneideinsatzes 8 verbunden. Gegenüberliegende Schneiden 16A,B liegen in einer gemeinsamen Ebene, die zu den von der Oberseite 30 und der Unterseite 32 aufgespannten Ebenen rechtwinklig angeordnet ist. Die zwei gegenüberliegende Schruppschneiden 16A verbindende Stirnseite ist mit dem Bezugszeichen 20A und die zwei gegenüberliegende Schlichtschneiden 16B verbindende Stirnseite mit dem Bezugszeichen 20B bezeichnet.

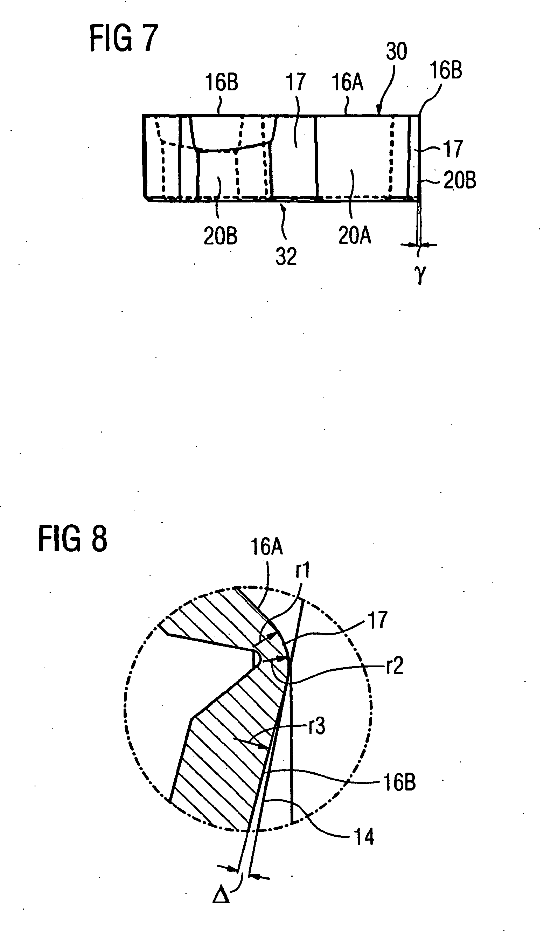

Beim Ausführungsbeispiel gemäß Fig. 6, bei dem der Schneideinsatz 8 als doppelseitige Wendeschneidplatte ausgebildet ist, weist die Stirnseite 20B, die die gegenüberliegenden Schlichtschneiden 16B miteinander verbindet, zwei Teil-Stirnseiten auf. Diese beiden Teil-Stirnseiten sind unter einem Winkel γ (vgl. Fig. 7) nach innen fallend zueinander geneigt angeordnet. Diese geneigte Anordnung ergibt sich insbesondere auch aus der Darstellung gemäß Fig. 7, in der ein lediglich als einseitige Wendeschneidplatte ausgebildeter Schneideinsatz 8 in einer Seitenansicht auf die Stirnseiten 20A,B dargestellt ist. Die hier einstückige Stirnseite 20B ist um den Winkel γ gegenüber der Senkrechten zu der Oberseite 30 geneigt. Der Winkel γ beträgt im Ausführungsbeispiel 2° und liegt vorzugsweise im Bereich zwischen 0,5 und 5°. Der Winkel γ ist insgesamt nach Art eines Freiwinkels ausgebildet und die Stirnseite 20B bildet eine Freifläche zur Schlichtschneide 16B. Bei der doppelseitigen Wendeschneidplatte gemäß Fig. 6 sind daher die beiden Teil-Stirnseiten ausgehend von den gegenüberliegenden Schlichtschneiden 16B jeweils um den Winkel γ nach innen geneigt angeordnet und treffen sich an einer gemeinsamen Mittenlinie 36.

Die Schlichtschneide 16B ist zur Erzielung eines möglichst guten Schneidergebnisses als Wiper-Schneide ausgebildet. Aus der vergrößerten Darstellung des in Fig. 2 mit einem Kreis gekennzeichneten Ausschnitts im Bereich des gerundeten Schneidenecks 17 ist zu entnehmen, dass der gerundete Übergang von der Schruppschneide 16A zur Schlichtschneide 16B sich aus mehreren Radien r₁,r₂ zusammensetzt. Hierbei weist der zur Schruppschneide 16A hin orientierte Radius r₁ einen kleineren Wert als der zur Schlichtschneide 16B hin orientierte Radius r₂ auf. Durch diese Maßnahme wird eine bessere Oberflächengüte bei der Werkstückbearbeitung erzielt.

Wie aus Fig. 8 weiterhin zu entnehmen ist, schließt sich an den zweiten Radius r₂ ein weiterer, sehr großer Radius r₃ an. Die durch den großen Radius r₃ definierte Kreisoder Bogenlinie definiert den Verlauf der Schlichtschneide 16B. D.h. die Schlichtschneide 16B ist insgesamt gekrümmt oder bogenförmig verlaufend ausgebildet. Der Radius r₃ liegt hierbei je nach Anwendungsfall in einem Bereich zwischen 500 mm und 3000 mm. Aufgrund des sehr großen Durchmessers erscheint selbst in der vergrößerten Darstellung gemäß Fig. 8 die Schlichtschneide 16B als eine gerade Linie. Durch die gerundete Ausgestaltung schließt sich der höchste Punkt der Schlichtschneide 16B in Bezug zu der Bearbeitungsebene 14 unmittelbar an das Schneideneck 17 an. Mit zunehmender Entfernung vom Schneideneck 17 entfernt sich die Schlichtschneide 16B zunehmend von der Bearbeitungsebene 14, so dass ein Nebenschneiden-Freigang Δ ausgebildet ist. Der Nebenschneiden-Freigang Δ definiert daher einen Abstand zwischen der Schlichtschneide 16B und der Bearbeitungsebene 14. Der Nebenschneiden-Freigang Δ ist im Ausführungsbeispiel ausschließlich durch den gekrümmten Verlauf der Schlichtschneide 16B gebildet.

Der Schneideinsatz 8 wurde in den Figuren im Zusammenhang mit dem Planfräser 2 als Werkzeug und mit einer sechseckigen Grundfläche beschrieben. Prinzipiell ist ein derartiger Schneidsatz auch für andere Werkzeugtypen und auch mit anderen Grundgeometrien, beispielsweise einer 8-, 10- oder 12-eckigen Grundfläche möglich.

Bei der Bearbeitung der Oberfläche eines Werkstücks rotiert der Planfräser 2 einerseits um seine Längs- und Drehachse. Bezüglich der Darstellung gemäß Fig. 3 liegt die Drehachse in der Papierebene in einer Horizontalen, also senkrecht zur Bearbeitungsebene 14. Gleichzeitig wird der Planfräser 2 in die durch einen Pfeil angedeutete Vorschubrichtung 34 (vgl. Fig. 2 und Fig. 3) parallel zur Bearbeitungsebene 14 verfahren. Bei dieser Bewegung wird über die Schruppschneide 16A kontinuierlich Material von der Oberseite des Werkstücks abgetragen. Die über die Schruppschneide 16A grob bearbeitete Werkzeugoberfläche wird unmittelbar durch die benachbarte Schlichtschneide 16B des gleichen Scheideinsatzes 8 fein bearbeifet, die im Ausführungsbeispiel durch Ihre parallel zur Bearbeitungsebne 14 ausgerichtete Orientierung über ihre gesamte Länge wirksam ist. Hierdurch wird eine sehr effiziente Feinbearbeitung erzielt und eine sehr hohe Oberflächengüte des bearbeiteten Werkstücks erreicht.

## Patentansprüche

1. Schneideinsatz (8) zur spanenden Bearbeitung eines Werkstücks mit einem n-eckigen Grundkörper mit n≥6, dessen die n-eckige Grundfläche begrenzenden n-Kanten abwechselnd als Schlichtschneiden (16B) zur Feinbearbeitung und als Schruppschneiden (16A) zur Grobbearbeitung des Werkstücks ausgebildet sind,
wobei jeweils eine Schneide (16A,B) zu ihren benachbarten Schneiden (16B,16A) unter unterschiedlichen Innenwinkeln (α, β) angeordnet ist, so dass die Schneiden (16B,16A) wechselweise unterschiedlich lang ausgebildet sind, wobei benachbarte Schneiden (16A,B) in einer Aufsicht auf den Schneideinsatz betrachtet alternierend unter einem großen Innenwinkel (β) und einem kleinen Innenwinkel (α) zueinander angeordnet sind und
**dadurch gekennzeichnet,**
**dass** der große Innenwinkel (β) maximal 140° beträgt.

2. Schneideinsatz (8) nach Anspruch 1,
**dadurch gekennzeichnet,**
**dass** die n-Kanten in einer Ebene liegen.

3. Schneideinsatz (8) nach Anspruch 1 oder 2,
**dadurch gekennzeichnet,**
**dass** der große Innenwinkel (β) um zumindest 5° größer ist als der n-te Teil der Winkelsumme des n-eckigen Grundkörpers.

4. Schneideinsatz (8) nach einem der vorhergehenden Ansprüche,
**dadurch gekennzeichnet,**
**dass** die Schruppschneide (16A) in einer Einbaulage in einem Werkzeugtragkörper (4) unter einem definierten Einstellwinkel (κ) bezüglich einer Bearbeitungsebene (14) orientiert angeordnet ist, wobei die Winkelsumme des Einstellwinkels (κ) und des großen Innenwinkels (β) etwa 180° beträgt.

5. Schneideinsatz (8) nach Anspruch 4,
**dadurch gekennzeichnet,**
**dass** die Schlichtschneide (16B) einen Nebenschneiden-Freigang (Δ) zur Befestigungsebene (14) aufweist.

6. Schneideinsatz (8) nach einem der vorhergehenden Ansprüche,
**dadurch gekennzeichnet,**
**dass** die Schlichtschneide (16B) als Wiper-Schneide ausgebildet ist.

7. Schneideinsatz (8) nach einem der vorhergehenden Ansprüche,
**dadurch gekennzeichnet,**
**dass** die Schlichtschneide (16B) entlang einer Bogenlinie verläuft.

8. Schneideinsatz (8) nach einem Anspruch 7,
**dadurch gekennzeichnet,**
**dass** die Bogenlinie eine Kreislinie mit einem Radius (r3) ist, der im Bereich zwischen 500 mm und 3000 mm liegt.

9. Schneideinsatz (8) nach einem der Ansprüche 4 bis 8,
**dadurch gekennzeichnet,**
**dass** er für Einstellwinkel (κ) zwischen 40° und 55°, insbesondere für einen Einstellwinkel (κ) von 45°, vorgesehen ist.

10. Schneideinsatz (8) nach einem der vorhergehenden Ansprüche,
**dadurch gekennzeichnet,**
**dass** er als doppelseitige Wendeschneidplatte mit 2n Schneiden (16A,B) ausgebildet ist.

11. Schneideinsatz (8) nach Anspruch 10,
**dadurch gekennzeichnet,**
**dass** gegenüberliegende Schneiden (16A,B) jeweils über eine Stirnseite (20 A,B) verbunden sind, die zwei Teil-Stirnseiten aufweiset, die unter einem Freiwinkel (γ) nach innen fallend zueinander geneigt angeordnet sind.

12. Werkzeug (2) zur spanenden Bearbeitung eines Werkstücks, insbesondere Fräser, mit einem Werkzeugtragkörper (4), an dem zumindest ein Schneideinsatz (8) nach einem der vorhergehenden Ansprüche befestigt ist.

13. Werkzeug (2) nach Anspruch 12, bei dem der Werkzeugtragkörper (4) einen Plattensitz (10) mit zumindest zwei stirnseitigen Anlageflächen (19) aufweist, wobei zwischen den Anlageflächen (19) eine einen Freiraum bildende Aufnahmetasche (22) vorgesehen ist.

14. Verfahren zur spanenden Bearbeitung eines Werkstücks mit Hilfe eines Werkzeugs (2) nach Anspruch 12 oder 13, aufweisend zumindest einen Schneideinsatz (8) nach einem der Ansprüche 1 bis 11, wobei eine der Schruppschneiden (16A) unter einem definierten Einsteitwinkel (κ) zu einer Bearbeitungsebene (14) des Werkstücks orientiert und bei einer Vorschubbewegung des Werkzeugs in Eingriff mit dem Werkstück ist, wobei gleichzeitig die an die Schruppschneide (16A) angrenzende Schlichtschneide (16B) in Eingriff mit dem Werkstück steht.

## Claims

1. Cutting insert (8) for machining a workpiece, comprising an n-cornered parent body, where n ≥ 6, the n-edges of which, defining the n-cornered base area, are alternately designed as finishing lips (16B) for the finish machining of the workpiece and as roughing lips (16A) for the rough machining of the workpiece, wherein each lip (16A, B) is arranged at different interior angles (α, β) to the adjacent lips (16B, 16A) thereof, such that the lips (16B, 16A) are alternately formed with different lengths, wherein adjacent lips (16A, B), as viewed in a horizontal projection of the cutting insert, are alternately arranged at a large interior angle (β) and at a small interior angle (α) to one another **characterized in that** the large interior angle (β) is at most 140°.

2. Cutting insert (8) according to Claim 1, **characterized in that** the n-edges lie in one plane.

3. Cutting insert (8) according to Claim 1 or 2, **characterized in that** the large interior angle (β) is at least 5° larger than the nth part of the angular sum of the n-cornered parent body.

4. Cutting insert (8) according to one of the preceding claims, **characterized in that** the roughing lip (16A), in a fitted position in a tool carrying body (4), is oriented at a defined setting angle (κ) to a machining plane (14), wherein the angular sum of the setting angle (κ) and the large interior angle (β) is about 180°.

5. Cutting insert (8) according to Claim 4, **characterized in that** the finishing lip (16B) has a secondary lip clearance (Δ) relative to the machining plane (14).

6. Cutting insert (8) according to one of the preceding claims, **characterized in that** the finishing lip (16B) is designed as a wiper lip.

7. Cutting insert (8) according to one of the preceding claims, **characterized in that** the finishing lip (16B) runs along a curved line.

8. Cutting insert (8) according to Claim 7, **characterized in that** the curved line is a circular line having a radius (r3) which lies within the range of between 500 mm and 3000 mm.

9. Cutting insert (8) according to one of Claims 4 to 8, **characterized in that** it is intended for setting angles (κ) of between 40° and 55°, in particular for a setting angle (κ) of 45°.

10. Cutting insert (8) according to one of the preceding claims, **characterized in that** it is designed as a double-sided indexable cutting insert having 2n lips (16A, B).

11. Cutting insert (8) according to Claim 10, **characterized in that** opposite lips (16A, B) are in each case connected via an end face (20A, B) which has two end face sections which are arranged so as to be inclined relative to one another in an inwardly sloping manner at a clearance angle (γ).

12. Tool (2) for machining a workpiece, in particular a milling tool, comprising a tool carrying body (4), to which at least one cutting insert (8) according to one of the preceding claims is fastened.

13. Tool (2) according to Claim 12, in which the tool carrying body (4) has an insert seat (10) having at least two end-face bearing surfaces (19), wherein an accommodating pocket (22) forming a clearance space is provided between the bearing surfaces (19).

14. Method of machining a workpiece by means of a tool (2) according to Claim 12 or 13, having at least one cutting insert (8) according to one of Claims 1 to 11, wherein one of the roughing lips (16A) is oriented at a defined setting angle (κ) relative to a machining plane (14) of the workpiece and is in engagement with the workpiece during a feed movement of the tool, wherein at the same time the finishing lip (16B) adjoining the roughing lip (16A) is in engagement with the workpiece.

## Revendications

1. Insert de coupe (8) pour l'usinage par enlèvement de copeaux d'une pièce comprenant un corps de base à n coins, avec n ≥ 6, dont les n côtés limitant la surface de base à n coins sont réalisés en alternance sous forme d'arêtes de coupe de finition (16B) pour l'usinage fin, et sous forme d'arêtes de coupe de dégrossissage (16A) pour l'usinage grossier de la pièce,
une arête de coupe (16A,B) étant à chaque fois disposée par rapport à ses arêtes de coupe adjacentes (16B,16A) suivant des angles intérieurs différents (α, β), de sorte que les arêtes de coupe (16B,16A) soient réalisées avec des longueurs différentes en alternance, des arêtes de coupe adjacentes (16A,B), considérées en vue en plan sur l'insert de coupe, étant disposées les unes par rapport aux autres en alternance suivant un grand angle intérieur (β) et un petit angle intérieur (α) **caractérisé en ce que** le grand angle intérieur (β) valant au maximum 140°.

2. Insert de coupe (8) selon la revendication 1,
**caractérisé en ce que**
les n côtés sont situés dans un plan.

3. Insert de coupe (8) selon la revendication 1 ou 2,
**caractérisé en ce que**
le grand angle intérieur (β) est supérieur d'au moins 5° à la nième partie de la somme des angles du corps de base à n coins.

4. Insert de coupe (8) selon l'une quelconque des revendications précédentes,
**caractérisé en ce que**
l'arête de coupe de dégrossissage (16A) est disposée dans une position d'installation dans un corps porte-outil (4) de manière orientée suivant un angle d'ajustement défini (κ) par rapport à un plan d'usinage (14), la somme des angles de l'angle d'ajustement (κ) et du grand angle intérieur (β) valant approximativement 180°.

5. Insert de coupe (8) selon la revendication 4,
**caractérisé en ce que**
l'arête de coupe de finition (16B) présente un espace libre de coupe secondaire (Δ) par rapport au plan d'usinage (14).

6. Insert de coupe (8) selon l'une quelconque des revendications précédentes,
**caractérisé en ce que**
l'arête de coupe de finition (16B) est réalisée sous forme d'arête de coupe de raclage.

7. Insert de coupe (8) selon l'une quelconque des revendications précédentes, **caractérisé en ce que** l'arête de coupe de finition (16B) s'étend le long d'une ligne courbe.

8. Insert de coupe (8) selon la revendication 7,
**caractérisé en ce que**
la ligne courbe est une ligne circulaire de rayon (r3), qui mesure entre 500 mm et 3000 mm.

9. Insert de coupe (8) selon l'une quelconque des revendications 4 à 8,
**caractérisé en ce**
**qu'**il est prévu pour des angles d'ajustement (κ) compris entre 40° et 55°, notamment pour un angle d'ajustement (κ) de 45°.

10. Insert de coupe (8) selon l'une quelconque des revendications précédentes,
**caractérisé en ce**
**qu'**il est réalisé sous forme de plaquette de coupe réversible avec 2n arêtes de coupe (16A,B).

11. Insert de coupe (8) selon la revendication 10,
**caractérisé en ce que**
des arêtes de coupe opposées (16A,B) sont connectées à chaque fois par un côté frontal (20A,B), qui présente deux côtés frontaux partiels, qui sont inclinés l'un par rapport à l'autre en descendant vers le bas suivant un angle libre (γ).

12. Outil (2) pour l'usinage par enlèvement de copeaux d'une pièce, en particulier fraise, comprenant un corps porte-outil (4) sur lequel est fixé au moins un insert de coupe (8) selon l'une quelconque des revendications précédentes.

13. Outil (2) selon la revendication 12, dans lequel le corps porte-outil (4) présente un siège de plaque (10) avec au moins deux faces d'appui frontales (19), une cavité de réception (22) formant un espace libre étant prévue entre les faces d'appui (19).

14. Procédé pour l'usinage par enlèvement de copeaux d'une pièce à l'aide d'un outil (2) selon la revendication 12 ou 13, présentant au moins un insert de coupe (8) selon l'une quelconque des revendications 1 à 11, dans lequel l'une des arêtes de coupe de dégrossissage (16A) est orientée suivant un angle d'ajustement défini (κ) par rapport à un plan d'usinage (14) de la pièce et est en prise avec la pièce lors d'un mouvement d'avance de l'outil, l'arête de coupe de finition (16B) adjacente à l'arête de coupe de dégrossissage (16A) étant simultanément en prise avec la pièce.
